(19) Europäisches Patentamt

European Patent Office

Office européen des brevets

(11) **EP 1 164 078 B1**

(12) **EUROPÄISCHE PATENTSCHRIFT**

(45) Veröffentlichungstag und Bekanntmachung des Hinweises auf die Patenterteilung:
**01.02.2006 Patentblatt 2006/05**

(51) Int Cl.:
***B64G 1/24*** *(2006.01)*

(21) Anmeldenummer: **01112993.9**

(22) Anmeldetag: **08.06.2001**

(54) **Verfahren zur Positionshaltung von geostationären Satelliten**

Geostationary satellite station keeping method

Méthode de maintien de position d'un satellite géostationnaire

(84) Benannte Vertragsstaaten:
**AT BE CH CY DE DK ES FI FR GB GR IE IT LI LU MC NL PT SE TR**

(30) Priorität: **16.06.2000 DE 10029768**

(43) Veröffentlichungstag der Anmeldung:
**19.12.2001 Patentblatt 2001/51**

(73) Patentinhaber: **EADS Astrium GmbH**
**81663 München (DE)**

(72) Erfinder:
• **Ebert, Klaus, Dr.**
**85521 Ottobrunn (DE)**
• **Reger, Gerd, Dr.**
**82008 Unterhaching (DE)**

(74) Vertreter: **Ulrich, Thomas et al**
**EADS Deutschland GmbH,**
**LG-PM - Patente**
**81663 München (DE)**

(56) Entgegenhaltungen:
**EP-A- 0 922 635**

• **KELLY T J ET AL: "STATIONKEEPING OF GEOSTATIONARY SATELLITES WITH SIMULTANEOUS ECCENTRICITY AND LONGITUDE CONTROL" JOURNAL OF GUIDANCE AND CONTROL AND DYNAMICS, AIAA. NEW YORK, US, Bd. 17, Nr. 4, 1. Juli 1994 (1994-07-01), Seiten 769-777, XP000494546 ISSN: 0731-5090**
• **PARVEZ S A: "SOLAR PRESSURE DISTURBANCE ON GSTAR AND SPACENET SATELLITES" JOURNAL OF SPACECRAFT AND ROCKETS, AMERICAN INSTITUTE OF AERONAUTICS AND ASTRONAUTICS. NEW YORK, US, Bd. 31, Nr. 3, 1. Mai 1994 (1994-05-01), Seiten 482-488, XP000456229 ISSN: 0022-4650**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zur Positionshaltung von geostationären Satelliten zur Kompensation des Einflusses von Störgrößen, wobei eine Ermittlung desjenigen Bereiches der Satellitenbahn in einem raumfesten Bezugssystem erfolgt, in dem der Einfluss der Störgrößen maximal ist und eine Aktivierung von Aktuatoren zur Positionshaltung in diesem Bereich maximaler Störgrößen erfolgt und zur Positionshaltung solche Aktuatoren verwendet werden, die eine Wirkung vornehmlich tangential zur Satellitenbahn entfalten.

Geostationäre Satelliten müssen hohe Genauigkeitsanforderungen bezüglich ihrer Positionierung erfüllen. Ein typischer Wert für den Toleranzbereich in Länge und Breite ist $\pm$ 0.05 Grad. Wegen der auf den Satelliten wirkenden Störeinflüsse durch insbesondere externe Störgrößen müssen Bahnmanöver durchgeführt werden, um die Satellitenposition im vorgegebenen Toleranzbereich zu halten. Es wird dabei unterschieden zwischen einer Positionshaltung, die überwiegend in Nord-Süd-Richtung erfolgt, wie sie beispielsweise aus US 5,020,746 und US 5,826,831 bekannt ist und einer überwiegenden Ost-West-Positionshaltung, wie sie beispielsweise aus T. J. Kelly et al., "Stationkeeping of Geostationary Satellites with Simultaneous Eccentricity and Longitude Control", Journal of Guidance Control and Dynamics, Vol. 17, No. 4, July - August 1994 und aus E. M. Soop, "Handbook of Geostationary Orbits", Kap. 7.1 - 7.4, Space Technology Library, 1994 bekannt sind. Die wesentlichen Störgrößen für die Position des Satelliten sind:

-    Strahlungsdruck der Sonne
     Der Strahlungsdruck der Sonne beeinflusst die Exzentrizität (auch dargestellt als Vektorexzentrizität) der Satellitenbahn, die einen Korrekturbedarf insbesondere in Ost-West-Richtung nach sich zieht. Insbesondere für Satelliten mit großen Solargeneratoren wie Kommunikationssatelliten ist der Solardruck die dominante Störgröße.

-    Höhere Terme im Gravitationspotential der Erde

-    Die tesseralen Terme des Gravitationspotentials verursachen eine Beschleunigung in der mittleren geographischen Länge ($\lambda$) des Satelliten. $\ddot{\lambda}$ hängt von der geographischen Länge $\lambda$ des Satelliten ab. $\ddot{\lambda}(\lambda)$ hat an vier Stellen über der Erde eine Nullstelle (Gleichgewichtspunkt) und erreicht an anderen Stellen den Maximalwert $|\ddot{\lambda}|_{max} = 2 \cdot 10^{-3}$ Grad/Tag$^2$.

-    Gravitationseffekte von Sonne und Mond
     Diese Störeffekte wirken überwiegend in Nord-Süd-Richtung. Für die Ost-West-Richtung verursachen sie periodische Störeffekte in der mittleren Länge und in der Vektorexzentrizität.
     Ein eingangs beschriebenes Verfahren zur Positionshaltung von geostationären Satelliten ist aus der EP-A 0 922 635 bekannt. Das dort beschriebene Verfahren arbeitet mit einer Triebwerkskonfiguration mit zwei Sätzen von je vier Triebwerken, um Positionshaltemanöver mit der Entladung von Reaktionsrädern in Satelliten zu kombinieren. Es wird ein effizienter Bereich für die Durchführung der Manöver bestimmt. Der eingesetzte Regelungsaufwand für die Durchführung der Manöver ist beachtlich.
     Aufgabe der vorliegenden Erfindung ist es, ein effektives Verfahren zur Positionshaltung von geostationären Satelliten bereitzustellen, das mit einem Minimum an Regelungsaufwand und damit Treibstoffaufwand auskommt.
     Diese Aufgabe wird gelöst durch die Merkmale des Anspruchs 1.
     Bei dem erfindungsgemäßen Verfahren zur Positionshaltung wird also aktiv der Bahnbereich ermittelt, in dem die maximale Beeinflussung erfolgt, und es wird dieser Beeinflussung bereits im Zeitpunkt ihres Auftretens entgegengewirkt.
     Es ist vorgesehen, dass Korrekturmanöver nicht nur durchgeführt werden, wenn die Satellitenposition einen gewissen Toleranzbereich überschreitet. Vielmehr werden Störeinflüsse in den für die bestehende Aktuatorkonfiguration optimalen Bereichen auf der Satellitenbahn korrigiert, auch wenn keine Verletzung des Toleranzbereiches vorliegt. Das Verfahren ermöglicht eine Reduktion des Toleranzbereiches bei gleichbleibendem Treibstoffbedarf bzw. Treibstoffersparnis bei konstant gehaltenem Toleranzbereich. Es ist grundsätzlich für Nord-Süd-Positoinsregelungen als auch für Ost-West-Positionsregelungen möglich.
     Als Störgrößen können grundsätzlich jede oder auch mehrere der o.g. Störgrößen betrachtet werden. Es kann jedoch sinnvoll sein, sich auf eine Betrachtung der dominanten Störgröße für den jeweils vorliegenden Anwendungsfall zu beschränken. So kann beispielsweise für Korrekturen überwiegend in Ost-West-Richtung der Strahlungsdruck der Sonne als dominante Störgröße betrachtet werden, der jedoch auch in anderen Fällen relevant werden kann.
     Mit der Heranziehung des Strahlungsdrucks der Sonne als Störgröße erfolgt eine Aktivierung der Aktuatoren in einem Bereich der Satellitenbahn, dessen Rektaszension ($\alpha_m$) mit der Rektaszension der Sonne ($\alpha_s$) in einem geozentrisch äquatorialen Bezugssystem einen Winkel zwischen 45° und 135°, insbesondere 90°, einschließt. Es sind dies diejenigen Bereiche der Satellitenbahn, in denen der Störeinfluss des Solardrucks maximal wird. Somit ist gerade in diesen Bereichen der Satellitenbahn ein Gegensteuem durch eine Aktivierung der Aktuatoren sinnvoll, um einer Positionsabweichung des Satelliten weitgehend entgegen zu wirken.

Zusätzlich oder alternativ wird die Drift in der geografischen Länge als Störgröße herangezogen und zur Vergrößerung des Exzentrizitätsradius (ec) der Satellitenbahn erfolgen Bahnkorrekturen derart, dass die Drift ($\triangle\lambda$) in der geografischen Länge minimal gehalten wird.

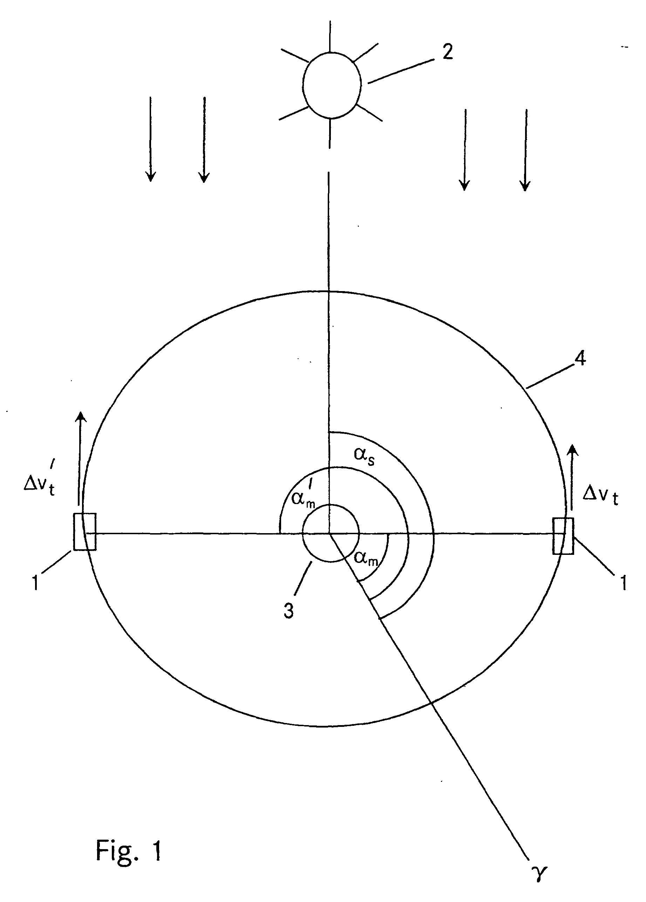

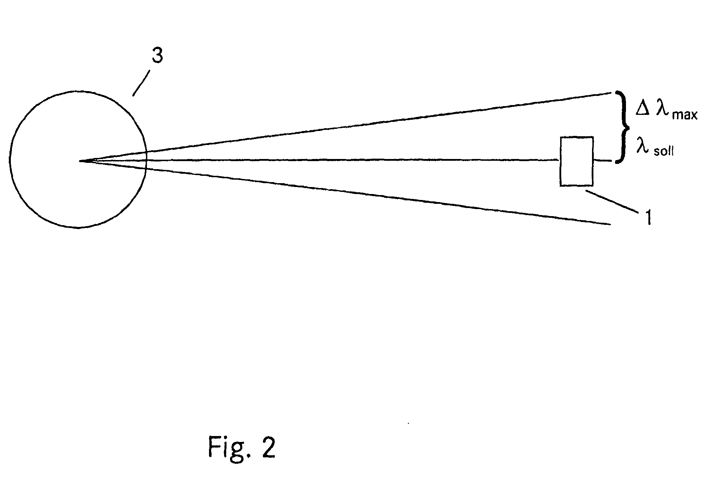

Ein Ausführungsbeispiel der vorliegenden Erfindung wird nachfolgend anhand der Fig. 1 und 2 erläutert. Es zeigen

Fig. 1    Satellitenbahn in einem raumfesten Bezugssystem,

Fig. 2    Satellitenposition in einem geozentrisch äquatorialen Bezugssystem.

Im folgenden soll der Fall der Ost-West-Positionsregelung für geostationäre Satelliten betrachtet werden. Ein geostationärer Satellit 1 wird, wie in Fig. 2 dargestellt, durch eine Bahnregelung mit Hilfe von Aktuatoren in einem Toleranzbereich $\pm\,\Delta\lambda_{max}$ (typischer Wert: 0.05 Grad) um den Sollwert der geographischen Länge $\lambda_{soll}$ gehalten. Hierzu ist eine Regelung der mittleren Länge $\overline{\lambda}$, der mittleren Drift D in der Länge und der mittleren Vektorexzentrizität $\vec{e}$ erforderlich. Die Komponenten der Vektorexzentrizität $\vec{e}$ sind wie folgt definiert.

$$(1) \quad e_x = \ e\cos(\Omega+\omega)$$

$$e_y = \ e\sin(\Omega+\omega)$$

Q:    Rektaszenion des aufsteigenden Krotens
$\omega$:    Argument des Perigäums
e:    Exzentrizität der Bahn

und beschreiben, wie stark elliptisch die Bahnform der Satellitenbahn in einem raumfesten Bezugssystem ist.

In regelmäßigen Zeitabständen $\Delta t$ werden Ost-West-Manöver zur Positionskorrektur durchgeführt. Ein typischer Wert für den Zeitabstand ist bislang $\Delta t = 14$ Tage. Jedes Ost-West-Manöver kann dabei aus mehreren Teilmanövern bestehen, wobei deren Zahl von der gezielten Änderung in den Größen $\overline{\lambda}$, D, $\vec{e}$ abhängt.

| Zahl der Teilmanöver | Gezielte Änderung von |
|---|---|
| 1 | 1 Orbitgröße (z.B. D) |
| 2 | 2 Orbitgrößen (z.B. D, $\overline{\vec{e}}$ ) |
| 3 | 3 Orbitgrößen ( $\overline{\lambda}$, D, $\overline{\vec{e}}$ ) |

Ost-West Manöver bestehen bevorzugt aus zwei (Regelung von D, $\vec{e}$) oder aus drei Teilmanövern (Regelung von $\overline{\lambda}$, D, $\overline{\vec{e}}$).

Die geographische Länge $\lambda$ hängt in folgender Weise von der Drift D und der Vektorexzentrizität $\vec{e}$ ab:

$$(2) \quad \lambda = \ \overline{\lambda}_o + D_o(t-t_o) + 2(e_x\sin\alpha - e_y\cos\alpha) + \frac{\ddot{\lambda}}{2}(t-t_o)^2$$

$\lambda$ :    geograpghische Länge

$\overline{\lambda}_o$ :    mittlere geographische Länge zur Zeit $t = t_o$

$D_o$ :    mittlere Drift in der geographischen Länge zur Zeit $t = t_o$

$\alpha$ : Rektaszension der Satelliten bezüglich Frühlingspunkt

$\lambda$ : Beschleunigung in Ost-West Richtung durch längenabhängige Terme im Erdpotential

Für geostationäre Satelliten mit großen Werten für das Oberfläche/Masse-Verhältnis ist der dominante Störeffekt der Strahlungsdruck der Sonne. Er führt zu einem nahezu kreisförmigen Verlauf in $\bar{e}$ über ein Jahr und zu einer Änderung der numerischen Exzentrizität e, wobei typische Werte für die Exzentrizität zu einer Überschreitung des Toleranzbereichs $\Delta\lambda_{max}$ in der Länge $\lambda$ führen. Es musste somit die numerische Exzentrizität e durch Aktivierung von Aktuatoren wieder reduziert werden, wobei dies über eine Änderung $\Delta v$ der Bahngeschwindigkeit in einem raumfesten Bezugssystem erzielt wird. Um den $\Delta v$-Bedarf für Ost-West-Manöver zu minimieren, wird der mittlere Exzentrizitätsvektor nicht auf Null geregelt, sondern durch Bahnmanöver auf einem Regelkreis mit dem Radius $e_c$ gehalten, wobei das Perigäum zur Sonne ausgerichtet ist (sun pointed perigee control).

Die Größe von $e_c$ ist gegeben durch

$$e_c = [\, 2\,(\Delta\lambda_{max} - \Delta\lambda_{marg}) - \Delta\lambda\,(\ddot{\lambda})\,]\,/\,4$$

Hierbei wird $\Delta\lambda_{max}$ um den Bereich $\Delta\lambda_{marg}$ reduziert, um Fehler in der Bahnbestimmung zu berücksichtigen. $\Delta\lambda$ ist gegeben durch

$$\Delta\lambda\,(\ddot{\lambda}) = \frac{|\ddot{\lambda}|}{2}\left(\frac{\Delta t}{2}\right)^2$$

und berücksichtigt die durch $\ddot{\lambda}$ über die Zeit $\Delta t$ verursachte Drift in der geographischen Länge des Satelliten. Für den Maximalwert in $|\ddot{\lambda}|$ und $\Delta t = 14$ Tage erreicht die Längsdrift den Wert

$$\Delta\lambda = 4.90\cdot 10^{-2}\,\text{Grad}$$

$e_c$ hängt also von $\ddot{\lambda}$ ab und muss für Satellitenpositionen mit $\ddot{\lambda} \neq 0$ deutlich reduziert werden. Diese Reduktion führt zu einer erhöhten Anforderung an die Änderung der Bahngeschwindigkeit $\Delta v$ für Ost-West-Manöver, wenn der Solardruck für die Ost-West-Bewegung der dominante Störterm ist.

Die bisherige Manöverstrategie für Ost-West-Manöver hat den Nachteil, dass die $\Delta v$-Anforderung von der geographischen Länge der Satellitenposition abhängt. Minimale $\Delta v$-Werte werden für $\lambda = 0$ erzielt. $\lambda \neq 0$ führt bei einem unveränderten Toleranzbereich $\Delta\lambda_{max}$ zu einer erhöhten $\Delta v$-Anforderung. Somit wurde bislang die Positionshaltung oder Positionskorrektur des Satelliten durch verschiedenste Faktoren bestimmt.

Das erfindungsgemäße Verfahren kann beispielsweise für autonome Bahnhaltungsverfahren eingesetzt werden, es eignet sich jedoch auch zur Implementierung in Verfahren für Ost-West-Manöver.

Im erfindungsgemäßen Verfahren wird insbesondere die Drift D korrigiert, auch wenn der Toleranzbereich in der geographischen Länge nicht verletzt wird. Hierzu sind Geschwindig keitsänderungen $\Delta v_t$ tangential zur Bahn erforderlich. Der Effekt der Driftkorrektur hängt nicht von der Rektaszension $\alpha_m$ ab, wo das Manöver durchgeführt wird.

Der Bereich der Satellitenbahn für die Korrekturen wird so bestimmt, dass der dominante Störeffekt auf den mittleren Exzentrizitätsvektor - nämlich der Strahlungsdruck der Sonne - optimal reduziert wird. Der Bereich für die Korrekturmanöver auf der Bahn wird daher durch den Einfluss des Manövers auf den mittleren Exzentrizitätsvektor $\bar{e}$ festgelegt. Die durch den Strahlungsdruck der Sonne verursachte Variation $\Delta\bar{e}^{(s)}$ im Exzentrizitätsvektor ist gegeben durch

$$\Delta e_x^{(s)} / \Delta t = -C \cos^2 \delta_s \sin \alpha_s$$

(3)

$$\Delta e_y^{(s)} / \Delta t = C \cos^2 \delta_s \cos \alpha_s$$

Hierbei ist C eine Konstante, die von der durch den Strahlungsdruck verursachten Störbeschleunigung des Satelliten abhängt. $\delta_s$ ist die Deklination und $\alpha_s$ die Rektaszension der Sonne im geozentrisch äquatorialen Koordinatensystem. In Fig. 1 ist die Rektaszension $\alpha_s$ veranschaulicht, welche gegenüber dem Frühlingspunkt $\alpha$ gemessen wird. Die Deklination ist aus Vereinfachungsgründen nicht dargestellt. In Figur 1 ist ebenfalls der Einfluss des Strahlungsdruckes (angedeutet durch vertikale Pfeile) der Sonne 2 auf einen Satelliten 1 dargestellt, der sich geostationär über der Erde 3 befindet. Wie die obige Gleichung (3) veranschaulicht, ist die Variation $\Delta \vec{e}^{(s)}$ also senkrecht zur vom Satelliten aus gesehenen aktuellen Richtung der Sonne 2.

Der Bahnbereich, an dem eine Driftkorrektur erfolgt, wird nun so gewählt, dass durch das Manöver gleichzeitige $\Delta \vec{e}^{(s)}$ möglichst weitgehend kompensiert wird. Es werden hierzu Aktuatoren wie z.B. Schubdüsen aktiviert, die dem Einfluss des Strahlungsdruckes entgegenwirken und letztlich eine Änderung $\Delta v$ der Bahngeschwindigkeit des Satelliten 1 bewirken. Dazu wird, beispielsweise bordautonom im Satelliten 1, der optimale Bahnbereich der Satellitenbahn 4 ermittelt, in dem eine Kompensation der Störeinflüsse erfolgen kann, also in dem gilt

$$\Delta \vec{e}^{(m)} \sim -\Delta \vec{e}^{(s)}$$

wobei $\Delta \vec{e}^{(m)}$ die Änderung in $\vec{e}$ durch das Manöver darstellt. Der Bahnbereich für das Manöver hängt mit Hinblick auf Gleichung (3) nur von der Rektaszension $\alpha_s$ der Sonne ab. Somit wird zur Bestimmung des optimalen Bahnbereiches diese Rektaszension $\alpha_s$ der Sonne ermittelt.

$\vec{e}$ wird am effizientesten mit tangentialen Geschwindigkeitsänderungen $\Delta v_t$ korrigiert. Hierfür erhält man

$$(4) \left\{ \begin{pmatrix} \Delta e_x \\ \Delta e_y \end{pmatrix} = \frac{2\Delta_t}{v_s} \begin{pmatrix} \cos \alpha_m \\ \sin \alpha_m \end{pmatrix} \right.$$

$\alpha_m$ : Rektaszension, wo Manöver durchgeführt wird
$v_s$ : Geschwindigkeit des Satelliten in der geostationären Bahn

Dabei ist $\alpha_m$ die Rektaszension des Satelliten 1 auf der Bahn 4, bei der das Manöver durchgeführt wird. Mit Gleichung (3) erhält man für tangentialen Schub aus Gleichung (4) den optimalen Bahnbereich

$$\alpha_m = \alpha_s \pm 90°$$

Falls die Triebwerkskonfiguration des Satelliten keinen rein tangentialen Schub zuläßt, ist der optimale Bahnbereich für das Manöver entsprechend zu modifizieren.

Es wird daher, beispielsweise bordautonom, ein Bahnbereich der Satellitenbahn ermittelt, dessen Rektaszension $\alpha_m$ etwa senkrecht zu der Rektaszension $\alpha_s$ der Sonne 2 ist. Das Manöver kann aber auch in einem weiteren Bahnbereich um diesen optimalen Bahnbereich erfolgen, er liegt jedoch zumindest innerhalb eines Bahnbereichs, der einen Winkel von 45˚ bis 135˚ mit der Rektaszension $\alpha_s$ der Sonne 2 einschließt. Die Rektaszension $\alpha_s$ der Sonne 2 kann mit üblichen Methoden bestimmt werden.

Durch die zusätzlichen Bahnkorrekturen kann der Exzentrizitätsradius $e_c$ vergrößert werden, das $\Delta\lambda(\lambda)$ nahe bei Null gehalten wird. Es ergibt sich eine einheitliche Manöverstrategie, die nicht von der geographischen Länge des Satelliten abhängt. Bei gleichem Toleranzbereich $\Delta\lambda_{max}$ wird der $\Delta v$-Bedarf für die Positionshaltung reduziert. Andererseits kann bei gleichem $\Delta v$-Bedarf kann $\Delta\lambda_{max}$ reduziert werden.

**Patentansprüche**

1. Verfahren zur Positionshaltung von geostationären Satelliten zur Kompensation des Einflusses von Störgrößen, wobei eine Ermittlung desjenigen Bereiches der Satellitenbahn in einem raumfesten Bezugssystem erfolgt, in dem der Einfluss der Störgrößen maximal ist und eine Aktivierung von Aktuatoren zur Positionshaltung in diesem Bereich maximaler Störgrößen erfolgt und zur Positionshaltung solche Aktuatoren verwendet werden, die eine Wirkung vornehmlich tangential zur Satellitenbahn entfalten, **dadurch gekennzeichnet, dass** als Störgröße der Strahlungsdruck der Sonne herangezogen wird und eine Aktivierung der Aktuatoren in einem Bereich der Satellitenbahn erfolgt, dessen Rektaszension ($\alpha_m$) mit der Rektaszension der Sonne ($\alpha_s$) in einem geozentrisch äquatorialen Bezugssystem einen Winkel zwischen 45˚ und 135˚, insbesondere 90˚, einschließt.

2. Verfahren zur Positionshaltung von geostationären Satelliten zur Kompensation des Einflusses von Störgrößen, wobei eine Ermittlung desjenigen Bereichs der Satellitenbahn in einem raumfesten Bezugssystem erfolgt, indem der Einfluss des Störgrößen maximal ist und eine Aktivierung von Aktuatoren zur Positionshaltung in diesem Bereich maximaler Störgrößen erfolgt und zur Positionshaltung solche Aktuatoren verwendet werden, die eine Wirkung vornehmlich tangential zur Satellitenbahn entfalten, **dadurch gekennzeichnet, dass** als Störgröße die Drift in der geografischen Länge herangezogen wird und dass zur Vergrößerung des Exzentrizitätsradius ($e_c$) der Satellitenbahn Bahnkorrekturen derart erfolgen, dass die Drift ($\triangle\lambda$) in der geographischen Länge minimal gehalten wird.

3. Verfahren zur Positionshaltung von geostationären Satelliten, **dadurch gekennzeichnet, dass** die Merkmale des Anspruchs 1 und die Merkmale des Anspruchs 2 in Kombination verwendet werden.

**Claims**

1. Method for the station-keeping of geostationary satellites in order to compensate for the influence of perturbing quantities, wherein the region of the satellite orbit where the influence of the perturbing quantities is greatest is determined in a spatially fixed reference system, and actuators for station-keeping are actuated in this region with maximum perturbing quantities, and those actuators which primarily exert an effect tangentially to the satellite orbit are used for the station-keeping, **characterised in that** the radiation pressure of the sun is adduced as a perturbing quantity, and the actuators are activated in a region of the satellite orbit whose right ascension ($\alpha_m$) makes an angle of between 45˚ and 135˚, in particular 90˚, with the right ascension ($\alpha_s$) of the sun in a geocentrically equatorial reference system.

2. Method for the station-keeping of geostationary satellites in order to compensate for the influence of perturbing quantities, wherein the region of the satellite orbit where the influence of the perturbing quantities is greatest is determined in a spatially fixed reference system, and actuators for station-keeping are actuated in this region with maximum perturbing quantities, and those actuators which primarily exert an effect tangentially to the satellite orbit are used for the station-keeping, **characterised in that** the drift in the longitude is adduced as a perturbing quantity, and **in that** orbital corrections such that the drift ($\triangle\lambda$) in the longitude is minimised are carried out in order to increase the eccentricity radius ($e_c$) of the satellite orbit.

3. Method for the station-keeping of geostationary satellites, **characterised in that** the features of Claim 1 and the features of Claim 2 are used in combination.

**Revendications**

1. Procédé de maintien de position de satellites géostationnaires pour la compensation de l'influence de grandeurs perturbatrices, dans lequel la zone de l'orbite de satellite dans laquelle l'influence des grandeurs perturbatrices est maximale est déterminée dans un système de référence fixe dans l'espace et des actuateurs sont activés pour le maintien de position dans cette zone de grandeurs perturbatrices maximales et des actuateurs du type qui déploient un effet principalement tangentiel à l'orbite de satellite sont utilisés pour le maintien de position, **caractérisé en ce que** la pression de radiation du soleil est utilisée en tant que grandeur perturbatrice et une activation des actuateurs survient dans une zone de l'orbite de satellite dont l'ascension droite ($\alpha_m$) forme avec l'ascension droite du soleil ($\alpha_s$) un angle compris entre 45˚ et 135˚, en particulier de 90˚, dans un système de référence géocentrique équatorial.

**2.** Procédé de maintien de position de satellites géostationnaires pour la compensation de l'influence de grandeurs perturbatrices, dans lequel la zone de l'orbite de satellite dans laquelle l'influence des grandeurs perturbatrices est maximale est déterminée dans un système de référence fixe dans l'espace, des actuateurs sont activés pour le maintien de position dans cette zone de grandeurs perturbatrices maximales et des actuateurs du type qui déploient un effet principalement tangentiel à l'orbite de satellite sont utilisés pour le maintien de position, **caractérisé en ce que** la dérive dans la longitude géographique est utilisée en tant que grandeur perturbatrice et que des corrections d'orbite surviennent pour l'augmentation du rayon d'excentricité ($e_c$) de l'orbite de satellite de telle sorte que la dérive ($\Delta\lambda$) dans la longitude géographique est minimisée.

**3.** Procédé de maintien de position de satellites géostationnaires, **caractérisé en ce que** les caractéristiques de la revendication 1 et les caractéristiques de la revendication 2 sont utilisées en combinaison.

Fig. 1

Fig. 2

$\Delta \lambda_{max}$

$\lambda_{soll}$